# EUROPÄISCHE PATENTSCHRIFT

(11) **EP 2 347 687 B1**
(45) Veröffentlichungstag und Bekanntmachung des Hinweises auf die Patenterteilung: **06.08.2014**
(21) Anmeldenummer: 11000318.3
(22) Anmeldetag: 17.01.2011
(51) Int. Cl.: A47J 43/25, B26D 3/28

(54) **Sicherheitshalter für Küchenhobel sowie ein solcher Küchenhobel**
Safety holder for mandolin slicer and mandolin slicer
Support de sécurité pour mandoline ainsi qu'une telle mandoline

(30) Priorität: 22.01.2010 DE 202010001260 U
(43) Veröffentlichungstag der Anmeldung: 27.07.2011
(73) Patentinhaber: Schleinzer, Werner, 2361 Laxenburg (AT)
(72) Erfinder: Schleinzer, Werner, 2361 Laxenburg (AT)
(74) Vertreter: Vossius, Tilman

(56) Entgegenhaltungen:
- DE-A1-102006 037 321
- GB-A- 2 313 771
- US-A1- 2005 193 899
- US-A1- 2008 095 908
- US-A1- 2009 133 587

## Beschreibung

### GEBIET DER ERFINDUNG

Die vorliegende Erfindung betrifft einen Sicherheitshalter für einen Küchenhobel zum Schneiden von Schneidgut wie Obst, Gemüse etc. sowie einen solchen Küchenhobel und Vorrichtungen zur Verwendung mit einem solchen Küchenhobel.

### HINTERGRUND DER ERFINDUNG

Küchenhobel werden zum Schneiden von Schneidgut wie Obst, Gemüse etc. verwendet. Dabei wird der Küchenhobel in der Regel mit einer Hand gehalten oder auf einen Behälter, wie beispielsweise eine Schale, aufgesetzt.

Mit der anderen Hand wird das Schneidgut entweder direkt oder mittels eines separaten Halters, auch Sicherheitshalter oder Fruchthalter genannt, in Längsrichtung über eine Führungsfläche und eine Auslauffläche des Küchenhobels hin- und herbewegt. Bei jedem Schneidhub von der Führungsfläche hin zur Auslauffläche wird über das Messer eine Scheibe von dem Schneidgut abgeschnitten und fällt durch einen Schlitz zwischen dem Messer und der Führungsfläche nach unten, beispielsweise in eine Schale. Mittels unterschiedlicher Einsätze, die in den Küchenhobel eingesetzt werden können, lässt sich beispielsweise die Schnittdicke variieren.

Die EP 2002 772 A1 und die EP 215 8830 A1 beschreiben einen solchen bekannten Küchenhobel mit V-förmig zulaufenden Messern sowie Vorrichtungen zur Verwendung mit einem solchen Küchenhobel, insbesondere einen Sicherheitshalter.

Aufgabe der vorliegenden Erfindung ist es, einen gegenüber den in der EP 2002 772 A1 und der EP 215 8830 A1 beschriebenen Küchenhobeln verbesserten Küchenhobel bereitzustellen. Ferner ist es Aufgabe der vorliegenden Erfindung, ein Küchenhobelset mit einem solchen verbesserten Küchenhobel sowie weiteren Vorrichtungen zur Verwendung mit diesem Küchenhobel bereitzustellen.

### ZUSAMMENFASSUNG DER ERFINDUNG

Die vorstehende Aufgabe wird durch den Gegenstand von Anspruch 1 gelöst.

Weitere vorteilhafte Ausgestaltungen der Erfindung sind in den Unteransprüchen definiert.

### KURZE BESCHREIBUNG DER ZEICHNUNGEN

Die folgenden Figuren stellen bevorzugte Ausführungsbeispiele erfindungsgemäßer Aspekte dar und dienen der Verdeutlichung der Erfindung.
Figur 1a zeigt eine perspektivische Ansicht eines erfindungsgemäßen Küchenhobels, in den ein beispielhafter Einsatz eingesetzt ist.
Figur 1b zeigt eine Draufsicht des erfindungsgemäßen Küchenhobels von Figur 1a, in den ein beispielhafter Einsatz eingesetzt ist.
Figur 2a zeigt eine perspektivische Ansicht eines erfindungsgemäßen Küchenhobels mit einem daran verschiebbar angebrachten Sicherheitshalter, der nicht Teil der Erfindung ist.
Figur 2b zeigt eine Draufsicht eines erfindungsgemäßen Küchenhobels mit einem daran verschiebbar angebrachten Sicherheitshalter, der nicht Teil der Erfindung ist.
Figur 2c zeigt eine Seitenansicht eines erfindungsgemäßen Küchenhobels mit einem daran verschiebbar angebrachten Sicherheitshalter der nicht Teil der Erfindung ist.
Figur 3a zeigt eine perspektivische Detailansicht des Sicherheitshalters, der nicht Teil der Erfindung ist, mit dem Druckstempel in einer eingefahrenen Position.
Figur 3b zeigt eine perspektivische Detailansicht des Sicherheitshalters, der nicht Teil der Erfindung ist, mit dem Druckstempel in einer ausgefahrenen Position.
Figur 3c zeigt eine Seitenansicht des Sicherheitshalters der jedoch nicht Teil der Erfindung ist, mit dem Druckstempel in einer ausgefahrenen Position.
Figur 3d zeigt eine perspektivische Explosionsdarstellung des Sicherheitshalters, der jedoch nicht Teil der Erfindung ist.
Figur 4a zeigt eine erste Seitenansicht eines Sicherheitshalters gemäß einer bevorzugten Ausführungsform.
Figur 4b zeigt eine weitere Seitenansicht des Sicherheitshalters gemäß der bevorzugten Ausführungsform.
Figur 4c zeigt eine perspektivische Ansicht des Sicherheitshalters gemäß der bevorzugten Ausführungsform von schräg oben.
Figur 4d zeigt eine perspektivische Ansicht des Sicherheitshalters gemäß der bevorzugten Ausführungsform von schräg unten.
Figur 5 zeigt eine perspektivische Explosionsdarstellung des Sicherheitshalters gemäß der bevorzugten Ausführungsform.
Figur 6 zeigt eine perspektivische Ansicht einer Auffangschale in teilweiser Explosionsdarstellung, die nicht Teil der Erfindung ist.
Figur 7 zeigt die Auffangschale von Figur 6 mit einem darauf gelagerten Küchenhobel und einem an den Küchenhobel angebrachten Sicherheitshalter in einer Seitenansicht.
Figur 8 zeigt in einer perspektivischen Darstellung die Auffangschale von Figur 6 mit einem darauf gelagerten Küchenhobel und einer Vielzahl von in der Auffangschale aufbewahrten Einsätzen für den Küchenhobel.

### DETAILLIERTE BESCHREIBUNG DER BEVORZUGTEN AUSFÜHRUNGSFORM

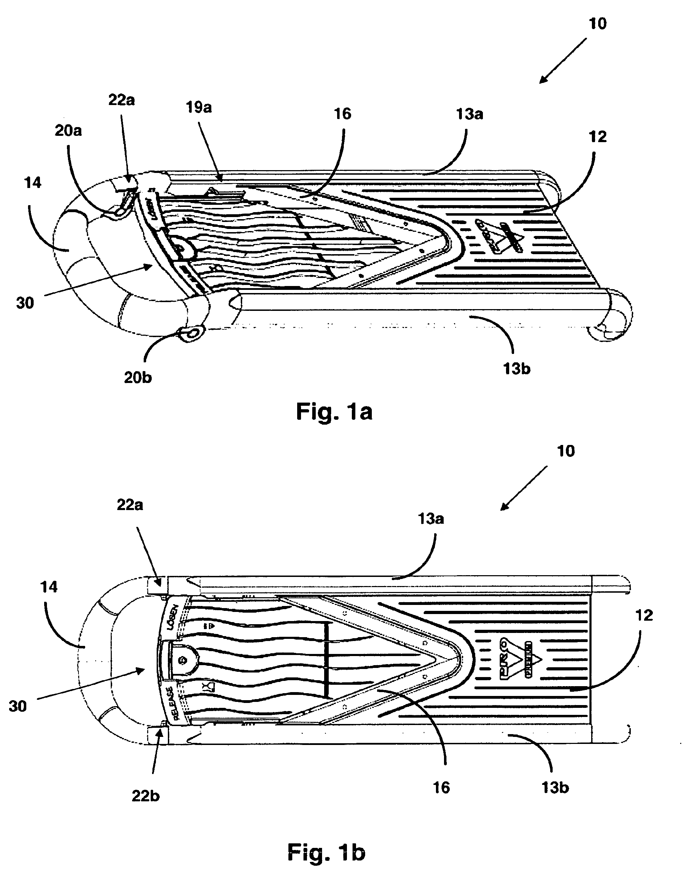

Die Figuren 1a und 1b zeigen einen Küchenhobel 10 gemäß einer bevorzugten Ausführungsform der Erfindung. Der Küchenhobel 10 besteht im Wesentlichen aus einem Grundkörper mit einer Basisplatte 12, deren Oberseite eine Auslauffläche bildet.

An den seitlichen Rändern der Basisplatte 12 ist jeweils ein Längsträger 13a, 13b angebracht, die dem Küchenhobel 10 eine größere Stabilität verleihen. Zwischen diesen Längsträgern 13a, 13b ist am oberen Ende des Küchenhobels 10 ein Haltegriff 14 ausgebildet, der es einem Benutzer ermöglicht, den Küchenhobel 10 geeignet zu positionieren und beim Schneiden von Gemüse oder Obst zu halten. Die Enden der Längsträger 13a, 13b sind am unteren Ende des Küchenhobels 10 nach unten gebogen.

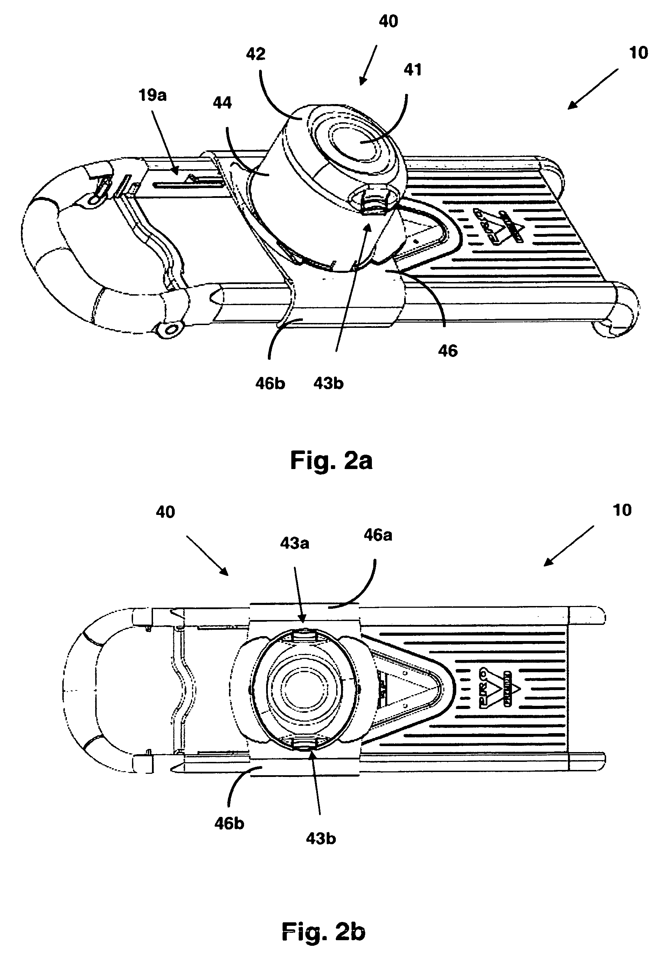

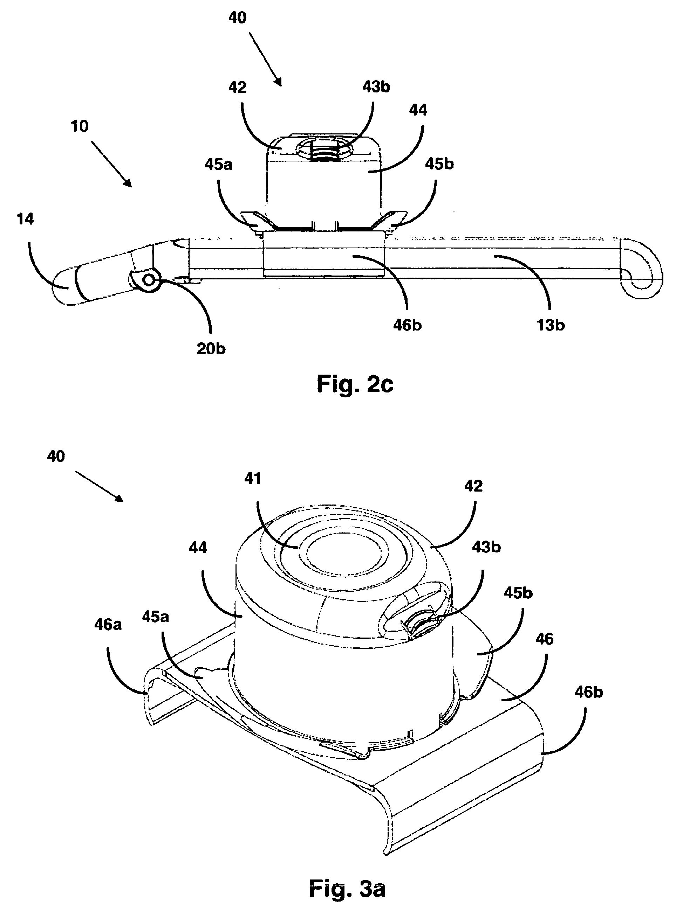

Neben einer Verbindung über die Basisplatte 12 sowie den Haltegriff 14 sind die Längsträger 13a, 13b über einen oder mehrere Querstege (siehe z.B. Figuren 2a und 2b, in denen der Einsatz aus dem Küchenhobel 10 herausgenommen ist) miteinander verbunden. Diese Querstege dienen zum einen zur Stabilisierung des Küchenhobels 10 und zum anderen als Auflagefläche und als Führung für in den Küchenhobel 10 einzusetzende Einsätze. Hierzu können die Querstege jeweils ungefähr in der Mitte zwei zentrale, nach oben abstehende Nasen aufweisen, die zwischen sich eine Lücke ausbilden, und zwar zur Aufnahme eines entsprechend ausgebildeten Vorsprungs an der Unterseite eines in den Küchenhobel 10 einzusetzenden Einsatzes 30.

Am vorderen Ende der durch die Basisplatte 12 ausgebildeten Auslauffläche ist ein V-Messer 16 angeordnet, das beispielsweise ein einstückiges Messer umfassen kann oder aus zwei Einzelmessem zusammengesetzt sein kann. Dabei ist die Auslauffläche bündig mit der Oberseite des V-Messers 16 ausgerichtet. Vorzugsweise sind die Ober- und/oder Unterseiten des V-Messers 16 mit einer Antihaftbeschichtung beschichtet. Alternativ kann auch das ganze V-Messer 16 aus einem Material bestehen, das gegenüber den zu schneidenden Lebensmitteln eine nicht haftende Wirkung aufweist. Geeignete Materialien dafür sind Materialien, die Polytetrafluorethylen (PTFE) enthalten, wie beispielsweise Teflon, oder Materialen, die ein Aluminium-Titan-Mischoxid enthalten. Ferner ist es vorstellbar, dass das V-Messer vollständig oder teilweise aus einem Keramikmaterial besteht.

Vorzugsweise ist der Haltegriff 14 des erfindungsgemäßen Küchenhobels 10 durch Gelenke 20a und 20b verschwenkbar ausgestaltet, die den Haltegriff 14 jeweils mit den Längsträgern 13a, 13b derart verbinden, dass der Haltegriff 14 relativ zu den Längsträgern 13a, 13b und damit zum Rest des erfindungsgemäßen Küchenhobels 10 verschwenkt werden kann. Dabei weist der Haltegriff 14 eine erste Position oder Grundposition auf, die in den Figuren 1a und 1b dargestellt ist und in der der Haltegriff 14 an die jeweiligen Längsträger 13a, 13b anstößt. Der Haltegriff kann aus dieser Grundposition in eine zweite Position oder Endposition verschwenkt werden. Wie sich dies den Figuren 1a und 1b entnehmen lässt, weist der Haltegriff 14 in der Nähe der Gelenke 20a und 20b jeweils einen Fixierungsvorsprung 22a, 22b auf. Diese Fixierungsvorsprünge 22a, 22b sind jeweils derart ausgestaltet, dass diese in der Grundposition des Haltegriffs 14 an jeweilige Abschnitte des hinteren Endes eines in den Küchenhobel eingesetzten Einsatzes 30 anstoßen und den Einsatz somit im Küchenhobel 10 fixieren. Zum Herausnehmen eines benutzten Einsatzes 30 und zum Einbringen eines neuen Einsatzes 30' wird der Haltegriff 14 aus dessen Grundposition in dessen Endposition verschwenkt. In dieser Endposition des Haltegriffs 14 wird ein sich in dem Küchenhobel 10 befindender Einsatz 30 nicht mehr durch die am Haltegriff 14 angebrachten Fixierungsvorsprünge 22a, 22b fixiert, so dass der Einsatz ohne weiteres entnommen werden kann und durch einen anderen Einsatz 30' ersetzt werden kann. Ist ein neuer Einsatz 30' derart in den Küchenhobel 10 eingebracht worden, kann der Haltegriff 14 wieder in dessen Grundposition verschwenkt werden, in der die Fixierungsvorsprünge 22a, 22b des Haltegriffs 14 wiederum an jeweilige Abschnitte des hinteren Endes des Einsatzes 30' anstoßen und den Einsatz 30' somit im Küchenhobel 10 fixieren. Es ist denkbar, dass der erfindungsgemäße Küchenhobel 10 eine Arretierungsvorrichtung aufweist, die den Haltegriff 14 in der Grundposition arretiert, so dass zum Verschwenken des Haltegriffs 14 aus der Grundposition in die Endposition zunächst die Arretierungsvorrichtung entriegelt werden muss, d.h. eine Vorspannkraft überwenden werden muss. Die Arretierungsvorrichtung kann beispielsweise als Schnappmechanismus oder mittels Magneten ausgestaltet sein.

Der Küchenhobel 10 kann beispielsweise mit dem in den Figuren 1a und 1b gezeigten Einsatz 30 oder den aus der EP 08 010 814 bekannten Einsätzen verwendet werden. Ein derartiger Einsatz 30 weist an seinen beiden Seiten jeweils eine längliche Führungsnut auf. Diese Führungsnuten werden beim Einbringen des Einsatzes 30 in den Küchenhobel 10 in entsprechende Führungsfedern 19a, 19b eingeführt. Die Führungsfedern 19a, 19b enden an ihrem unteren Ende jeweils in einem Stopperelement, beispielsweise in Form eines Querstegs, an den die vorderen Enden der Führungsnuten anstoßen, wenn der Einsatz 30 vollständig in den Küchenhobel 10 eingebracht ist. Der Fachmann erkennt somit, dass das Zusammenwirken der Führungsnuten des Einsatzes mit den an den Innenseiten der Längsträger 13a, 13b des Küchenhobels 10 angebrachten Führungsfedern 19a, 19b zum einen dazu dient, das Einbringen des Einsatzes in den Küchenhobel 10 zu führen, und zum insbesondere mittels des Stopperelements dazu dient, eine Bewegung des Einsatzes in Richtung des V-Messers 16 über die Einsatzposition hinaus zu vermeiden.

Die Figuren 2a bis 2c zeigen verschiedene Ansichten des erfindungsgemäßen Küchenhobels 10 mit einem daran verschiebbar angebrachten Sicherheitshalter 40, der jedoch nicht Teil der Erfindung ist . Die Figuren 3a bis 3d zeigen unterschiedliche Ansichten des Sicherheitshalters 40 ohne den Küchenhobel 10.

Der Sicherheitshalter 40 besteht im Wesentlichen aus einem abnehmbaren Deckelelement 42, einem zylinderförmigen Körperelement 44 mit einem ovalen Querschnitt und einem Bodenelement 46 zur Anbringung an den Küchenhobel 10. Das Bodenelement 46 besteht aus einem zentralen im Wesentlichen ebenen Abschnitt, der mit dem Körperelement 44 verbunden ist und eine Öffnung zur Aufnahme von Schneidgut aufweist, sowie zwei seitlichen gebogenen Führungsabschnitten 46a, 46b. Das Bodenelement 46 kann aus einem elastischen Kunststoffmaterial bestehen, das die Anbringung des Bodenelements 46 und damit des Sicherheitshalters 40 mittels einer Art Schnapppassung an den Küchenhobel 10 erlaubt. Hierzu ist das Bodenelement 46 derart ausgestaltet, dass die zwei seitlichen gebogenen Führungsabschnitte 46a, 46b um die Längsträger 13a, 13b des Küchenhobels 10 herumgeführt werden können, so dass der Sicherheitshalter 40 verschiebbar auf dem Küchenhobel 10 gelagert ist und bei einer Bewegung entlang des Küchenhobels 10 durch die Ineingriffnahme der Längsträger 13a, 13b durch die zwei seitlichen, gebogenen Führungsabschnitte 46a, 46b geführt wird, wie dies in den Figuren 2a bis 2c dargestellt ist. Hierzu können die Längsträger 13a, 13b einen Querschnitt aufweisen, welcher der Form der jeweiligen Innenseite der zwei seitlichen, gebogenen Führungsabschnitte 46a, 46b des Sicherheitshalters 40 entspricht.

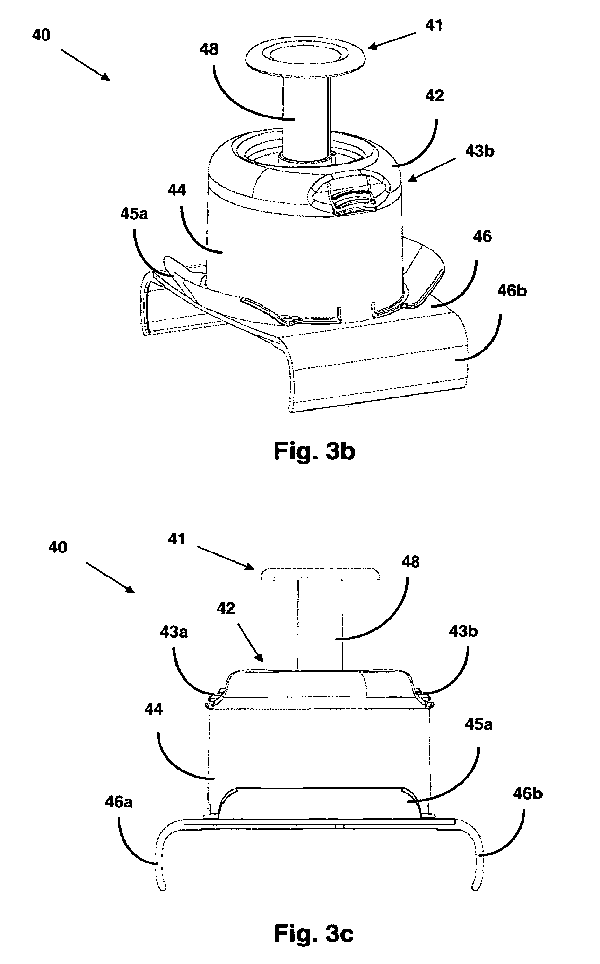

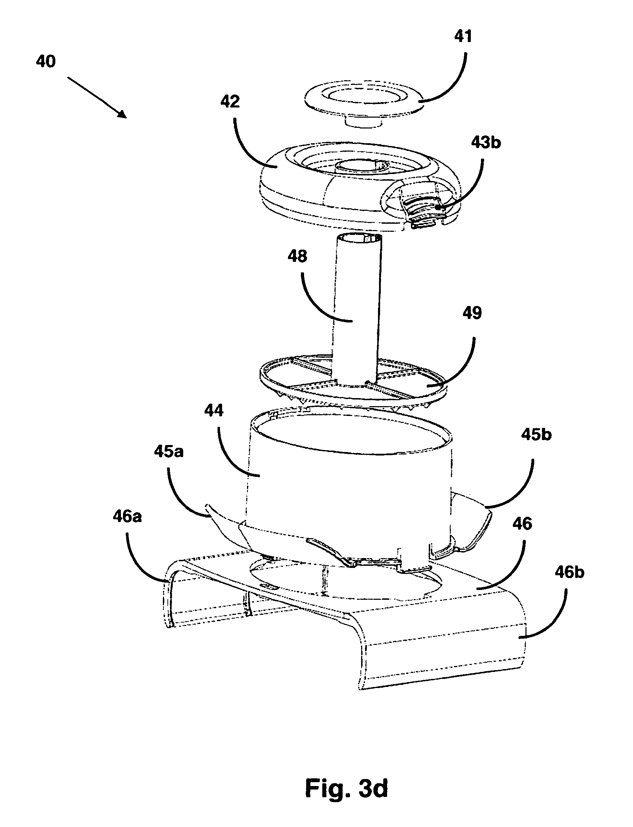

Wie vorstehend bereits erwähnt, definiert der ebene zentrale Abschnitt des Bodenelements 46 eine Öffnung zur Aufnahme von Schneidgut an der Unterseite des Sicherheitshalters 40 (siehe Figur 3d). Diese Öffnung führt in einen Aufnahmebereich, der von der Innenseite des zylinderförmigen Körperelements 44 und der Unterseite des Deckelelements 42 definiert wird. Im Zentrum des Deckelelements 42 ist eine weitere Öffnung vorgesehen, in der der Schaft eines Druckstempels 48 gleitend gelagert ist. Am oberen Ende des Schafts des Druckstempels 48 befindet sich ein scheibenförmiger Betätigungsflansch 41 und an dessen unterem Ende befindet sich eine Druckplatte bzw. Druckscheibe 49, wie sich dies der Figur 3d entnehmen lässt. Dabei haben sowohl der Betätigungsflansch 41 als auch die Druckplatte 49 einen größeren Durchmesser als die in dem Deckelelement 42 vorgesehene Öffnung, so dass der Bewegungsbereich des Druckstempels 48 im Wesentlichen durch ein Anstoßen des Betätigungsflansches 41 an der Oberseite des Deckelelements 42 bzw. der Druckplatte 49 an der Unterseite des Deckelelements 42 begrenzt wird. Diese zwei Positionen des Druckstempels 48 entsprechen einer eingefahrenen Position, die in den Figuren 2a bis 2c und 3 dargestellt ist, und einer ausgefahrenen Position des Druckstempels 48, die in den Figuren 3b und 3c dargestellt ist. In der eingefahrenen Position des Druckstempels 48 füllen der Druckstempel 48 und die Druckplatte 49 am unteren Ende des Druckstempels 48 den Aufnahmebereich aus, der durch die Innenseite des zylinderförmigen Körperelements 44 und die Unterseite des Deckelelements 42 definiert wird. Hierzu weist die Druckplatte 49 eine Form auf, die im Wesentlichen der Form des Querschnitts des zylinderförmigen Körperelements 44 entspricht, beispielsweise oval, wobei jedoch, wie der Fachmann erkennt, der jeweilige Außendurchmesser der Druckplatte 49 ein wenig kleiner als der jeweilige Innendurchmesser des Querschnitts des zylinderförmigen Körperelements 44 sein sollte, so dass die Druckplatte 49 ohne weiteres innerhalb des zylinderförmigen Körperelements 44 zwischen der eingefahrenen Position und der ausgefahrenen Position des Druckstempels 48 hin- und herbewegt werden kann.

Wie vorstehend bereits erwähnt, ist das Deckelelement 42 ferner derart ausgestaltet, dass sich dieses zusammen mit dam darin gleitend geführten Druckstempel 48 von dem zylinderförmigen Körperelement 44 abnehmen, um beispielsweise Scheidgut von oben in den durch das zylinderförmige Körperelement 44 definierten Aufnahmebereich einzubringen, und sodann wieder an dem zylinderförmigen Körperelement 44 anbringen lässt. Hierzu weist das Deckelelement 42 zwei Arretierelemente 43a, 43b auf. Beispielsweise kann es sich bei den Arretierelementen 43a, 43b um Bereiche des Deckelelements 42 handeln, die sich im angebrachten Zustand über das obere Ende des zylinderförmigen Körperelements 44 hinaus nach unten erstrecken und an deren unteren Enden jeweils eine Schulter aufweisen, die im angebrachten Zustand aufgrund der Vorspannung des Materials jeweils in eine Aussparung an der Innenseite des zylinderförmigen Körperelements 44 derart eingreift, dass das Deckelelement 42 mittels der Arretierelemente 43a, 43b fest am zylinderförmigen Körperelement 44 angebracht ist. Um das Deckelelement 42 und den darin gleitend gelagerten Druckstempel 48 von dem zylinderförmigen Körperelement 44 abzunehmen, werden die Bereiche des Deckelelements 42, die die Arretierelemente 43a, 43b ausbilden, nach innen gedrückt, um die jeweiligen Schultern aus den Aussparungen an der Innenseite des zylinderförmigen Körperelements 44 zu lösen.

Beispielsweise besteht das zylinderförmige Körperelement 44 aus einem durchsichtigen Material, so dass in dem Körperelement 44 aufgenommenes Schneidgut während des Schneidens gut sichtbar ist. Am unteren Ende des zylinderförmigen Körperelements 44 sind zwei nach oben gebogene Schutzflügel 45a, 45b vorgesehen, die verhindern sollen, dass bei der Arbeit mit dem auf den Küchenhobel 10 angebrachten Sicherheitshalter 40 die Finger bzw. die Hand eines Benutzers nach unten in Richtung des V-Messers 16 des Küchenhobels 10 abgleiten können. Auf der Unterseite der Druckplatte 49 des Druckstempels 48 können eine Vielzahl von kegelförmigen Dornen angeordnet sein (siehe Figur 3d), damit das Schneidgut von der Druckplatte gut in Eingriff genommen werden kann.

Der Fachmann wird somit erkennen, dass der an dem Küchenhobel 10 angebrachte Sicherheitshalter 40 ein besonders einfaches und sicheres Arbeiten erlaubt, für das lediglich das Deckelelement 42 abgenommen, Scheidgut in den Sicherheitshalter 40 eingebracht und das Deckelelement 42 wieder am Sicherheitshalter 40 angebracht werden muss.

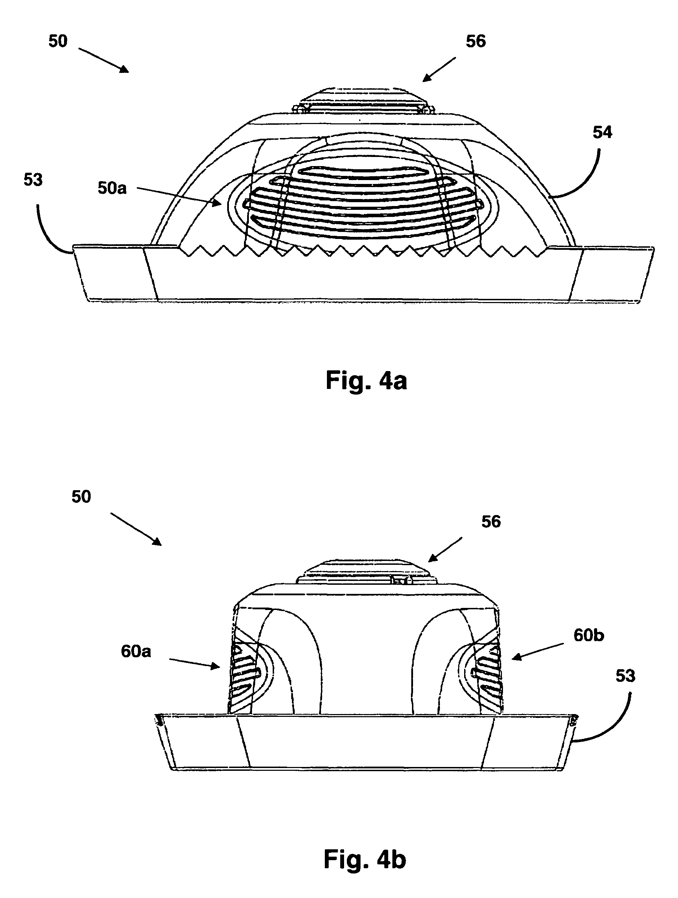

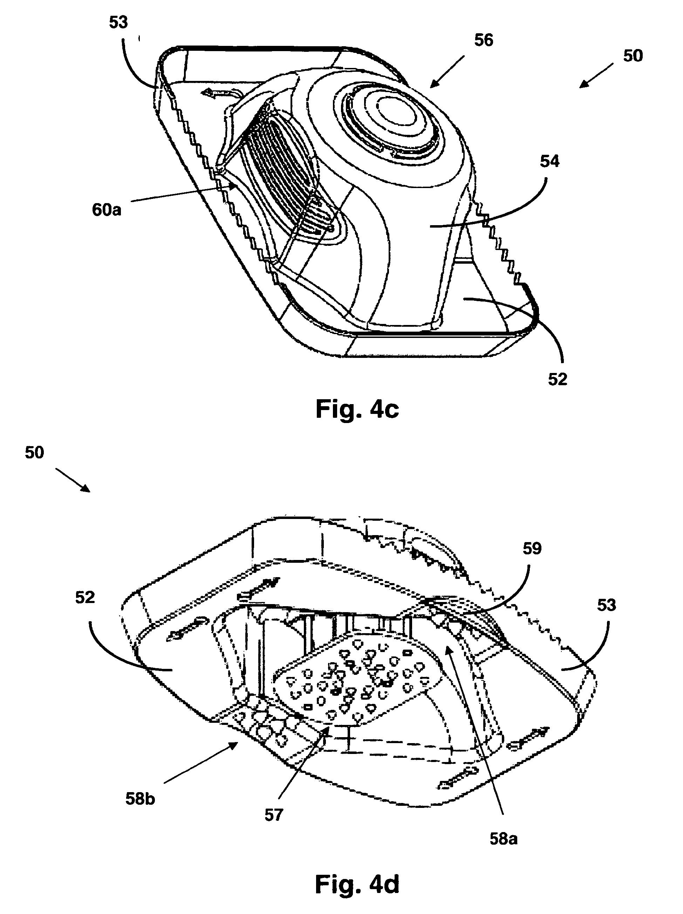

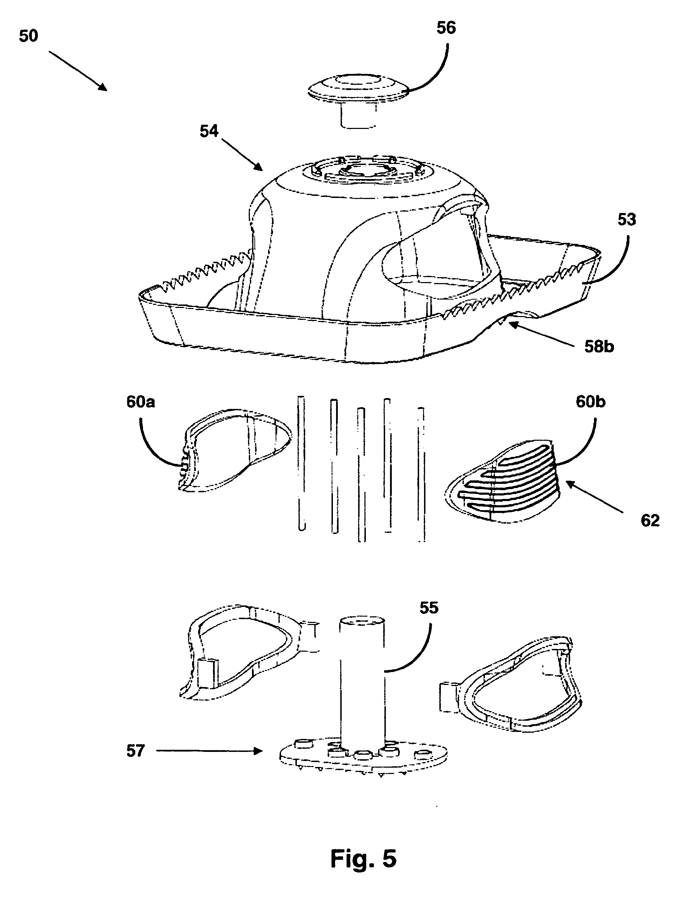

Die Figuren 4a bis 4d und 5 zeigen einen Sicherheitshalter bzw. Fruchthalter 50 gemäß einer bevorzugten Ausführungsform der Erfindung in Seitenansichten, perspektivischen Ansichten und einer Explosionsdarstellung.

Der Sicherheitshalter 50 gemäß dieser bevorzugten Ausführungsform besteht aus einem im Wesentlichen ebenen Bodenabschnitt 52, einem von dessen Umfang nach oben abstehenden Randabschnitt 53 sowie einer sich über dem ebenen Bodenabschnitt 52 wölbenden Greifkuppel 54. Die Greifkuppel 54 bildet auf der Oberseite im Wesentlichen die Greiffläche für die Finger bzw. die Hand eines Benutzers, der den Sicherheitshalter 50 benutzt, und auf der Unterseite einen Aufnahmebereich aus, in dem ein Obst oder ein Gemüse aufgenommen werden kann. nahmebereich aus, in dem ein Obst oder ein Gemüse aufgenommen werden kann. Ein gleitbar verschiebbarer Druckstempel 55 ist durch eine kreisförmige Öffnung in der Mitte der Greifkuppel 54 geführt und weist an seinem oberen Ende einen Betätigungsflansch 56 und an seinem unteren Ende eine Abstreifplatte 57 auf. Die Abstreifplatte 57 verläuft im eingefahrenen Zustand des Druckstempels 55, d.h. wenn sich der Betätigungsflansch 56 des Druckstempels 55 in anstoßender Beziehung mit dem Bereich der Greifkuppel 54 um die kreisförmige Öffnung herum befindet, bündig mit dem Bodenabschnitt 52 des Sicherheitshalters 50 und wird durch Führungsstangen geführt, die von der Unterseite der Greifkuppel 54 senkrecht zum Bodenabschnitt 52 hin abwärts verlaufen und durch entsprechende Löcher in der Abstreifplatte 57 des Druckstempels 55 geführt sind, wie sich dies Figur 4b entnehmen lässt. Auf der Unterseite der Abstreifplatte 57 des Druckstempels 55 ist eine Vielzahl von kleinen, beispielsweise kegelförmigen Dornen angeordnet, um das Schneidgut besser mit dem Sicherheitshalter 50 aufnehmen und halten zu können.

Insbesondere für die Verwendung mit länglichem Schneidgut bildet der Bodenabschnitt 52 zusammen mit dem Randabschnitt 53 des Sicherheitshalters 50 an dessen Seiten zwei Aussparungen 58a und 58b aus. In diesen Aussparungen 58a und 58b sind ebenfalls mehrere kleine kegelförmige Dornen angeordnet, um ein längliches Schneidgut in diesen in Eingriff nehmen zu können. Dabei verläuft bei der Aussparung 58a der Randabschnitt 53 über einen Quergrat 59 bis zu der von dem Bodenabschnitt 52 gebildeten Ebene, während die Aussparung 58b so ausgestaltet ist, dass ein längliches Schneidgut mit dem Sicherheitshalter 50 aufgenommen werden kann, von der Abstreifplatte 57, der Aussparung 58a und der Aussparung 58b gehalten werden kann und über die Aussparung 58b und den Randabschnitt 53 hinaus abstehen kann (mit anderen Worten: die Aussparung 58b weist keinen Quergrat auf). Dabei stößt das Schneidgut vorzugsweise an den Quergrat 59 in der Aussparung 58a an, so dass bei einer Verwendung des Sicherheitshalters 50 mit dem darin aufgenommenen Schneidgut mit einem erfindungsgemäßen Küchenhobel 10, wobei die Schneidrichtung der Richtung von der Aussparung 58a mit Quergrat 59 zu der Aussparung 58b ohne Quergrat entspricht, einer durch das Schneiden auf das Schneidgut ausgeübten Kraft entgegen gewirkt wird, die der Schneidrichtung entgegen gesetzt ist und danach trachtet, das Schneidgut von dem Sicherheitshalter 50 los zu machen.

Wie sich dies den Figuren 4a bis 4d und 5 entnehmen lässt, weist die Greifkuppel 54 zwei Greifabschnitte 60a, 60b auf. Diese Greifabschnitte 60a, 60b sind vorzugsweise derart auf der Greifkuppel 54 angeordnet, dass bei der Benutzung des erfindungsgemäßen Sicherheitshalters 50 die Finger des Benutzers, mit denen dieser den erfindungsgemäßen Sicherheitshalter 50 hält und führt, zumindest zum Teil auf den Greifabschnitten 60a, 60b aufliegen. Beispielsweise können die Greifabschnitte 60a, 60b flächenmäßig derart ausgestaltet und angeordnet sein, dass bei der Benutzung auf einem Greifabschnitt 60a der Daumen des Benutzers aufliegt und auf dem anderen Greifabschnitt 60b der Ringfinger und/oder der kleine Finger Benutzers aufliegen.

Im Gegensatz zu der Greifkuppel 54, die beispielsweise aus einem festen Kunststoff ausgebildet sein kann, sind die Greifabschnitte 60a und 60b aus einem elastisch leicht verformbaren Material ausgebildet, vorzugsweise aus einem elastisch verformbaren Kunststoff. Diese Ausgestaltung der Greifabschnitte 60a und 60b sowie die vorstehend beschriebene flächenmäßige Anordnung der Greifabschnitte 60a und 60b auf der Greifkuppel 54 ermöglichen, dass der Benutzer den erfindungsgemäßen Sicherheitshalter 50 besser und sicherer greifen kann. Dies liegt daran, dass beim Auflegen der Finger des Benutzers auf die Greifabschnitte 60a, 60b diese aufgrund ihrer elastischen Verformbarkeit nach innen nachgeben, was zu einem besseren und sicheren Halt führt, da die Finger des Benutzers nunmehr sozusagen in das "Innere" der Greifkuppel 54 hineinragen. Lässt der Benutzer den erfindungsgemäßen Sicherheitshalter 50 wieder los, indem er seine Finger von den Greifabschnitten 60a, 60b entfernt, kehren die Greifabschnitte 60a, 60b aufgrund ihrer elastischen Materialeigenschaften wieder in ihre jeweilige Ausgangsposition zurück.

Wie sich dies beispielsweise der Explosionsdarstellung in Figur 5 entnehmen lässt, sind die Greifabschnitte 60a und 60b vorzugsweise mit einer Riffelung 62 versehen. Der Bodenabschnitt 52, der Randabschnitt 53 und die Greifkuppel 54 können einstückig ausgebildet sein. Beispielsweise kann das in Figur 5 gezeigte Element, das den Bodenabschnitt 52, den Randabschnitt 53 und die Greifkuppel 54 ausbildet, mittels Spritzgusstechniken hergestellt werden. Dabei können dort, wo im fertigen Sicherheitshalter 50 die Greifabschnitte 60a, 60b angeordnet sein sollen, Öffnungen ausgebildet sein. In diese Öffnungen werden in einem weiteren Herstellungsschritt die entsprechend geformten, elastisch verformbaren Greifabschnitte 60a, 60b eingebracht und fest mit der Greifkuppel 54 verbunden, die jeweils den Rand der Öffnungen bildet. Das Verbinden der elastisch verformbaren Greifabschnitte 60a, 60b mit der Greifkuppel kann beispielsweiße durch ein Kleben oder Schweißen erfolgen. Bevorzugte Materialien für den Bodenabschnitt 52, den Randabschnitt 53 und die Greifkuppel 54 sind ABS-Kunststoff. Bevorzugte Materialen für die Greifabschnitte 60a, 60b TPR sind thermoplastische Kunststoffe.

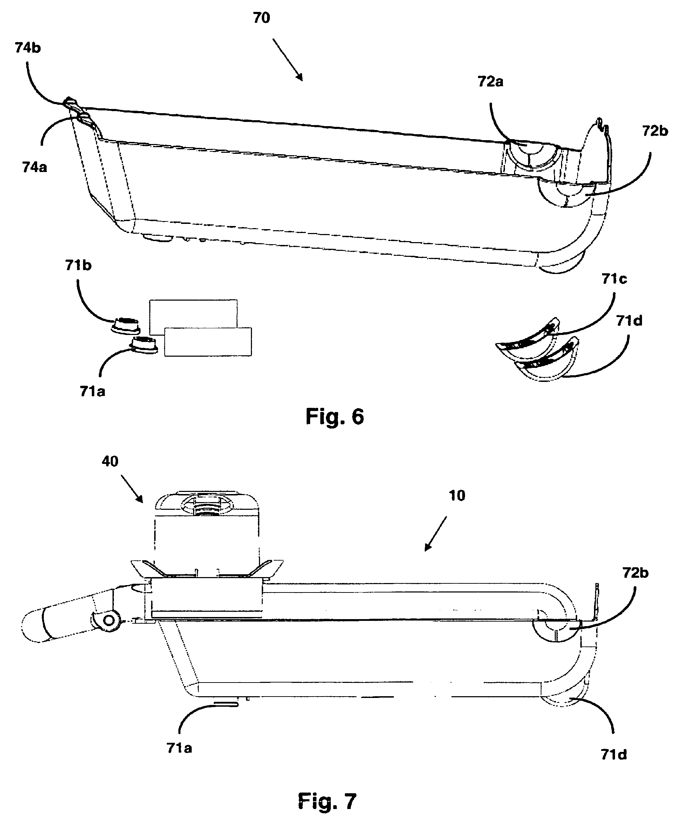

Die Figuren 6 bis 8 zeigen eine Schale 70 zum Auffangen von Schneidgut, das mit dem erfindungsgemäßen Küchenhobel 10 geschnittenen worden ist. Die Auffangschale 70 weist eine im Wesentlichen rechteckige Bodenfläche auf, an deren Unterseite in den jeweiligen Ecken Stopperelemente 71a, 71b, 71c, 71d angeordnet sind, die der Auffangschale 70 einen sicheren Stand, beispielsweise auf einem Küchentisch, verleihen. Beispielsweise bestehen die Stopperelemente 71a, 71b, 71c, 71d aus einem Material, das zu einer starken Reibung zwischen den Stopperelementen und einem Untergrund, beispielsweise einem Küchentisch, führt.

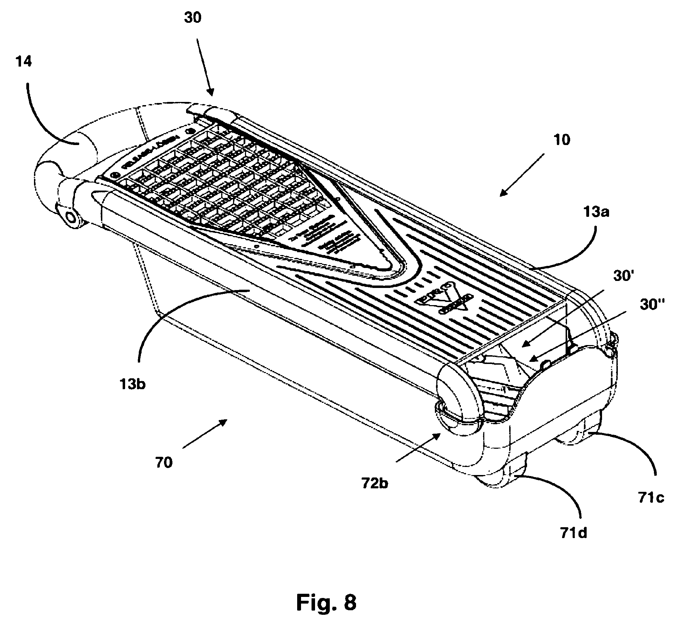

Wie sich dies insbesondere den Figuren 6 und 8 entnehmen lässt, befinden sich in den Längsseiten der Auffangschale 70 in der Nähe einer der Stirnseiten zwei halbkreisförmige, nach außen abstehende Aussparungen 72a, 72b. Dabei sind die Abmessungen der Auffangschale 70 so gewählt und die halbkreisförmigen, nach außen abstehenden Aussparungen 72a, 72b derart ausgestaltet und innerhalb der Auffangschale 70 angeordnet, dass die unteren gebogenen Enden der Längsträger 13a, 13b des erfindungsgemäßen Küchenhobels 10 in die Aussparungen 72a, 72b passen und somit eingebracht werden können und der erfindungsgemäße Küchenhobel 10 dabei auf zwei an der gegenüberliegenden Stirnseite vorgesehenen Vorsprüngen 74a, 74b der Auffangschale 70 abgelegt werden kann. Vorzugsweise liegt dabei ein die Längsträger 13a, 13b verbindender Quersteg des Küchenhobels 10 auf den Vorsprüngen 74a, 74b der Auffangschale 70 auf. In dieser Position ist der erfindungsgemäße Küchenhobel 10 stabil in der Auffangschale 70 gelagert und kann zum Schneiden zum Schneidgut verwendet werden, das sich bei Verwendung des Küchenhobels 10 in dieser Position in der Auffangschale 70 ansammelt. Aufgrund der halbkreisförmigen Ausgestaltung der nach außen abstehenden Aussparungen 72a, 72b und den entsprechend geformten gebogenen Enden der Längsträger 13a, 13b kann der erfindungsgemäße Küchenhobel 10 in dieser Position beispielsweise mittels des Griffs 14 ohne weiteres nach oben verschwenkt werden, wobei die abgerundeten Enden der Längsträger 13a, 13b des Küchenhobels 10 bis zum einem gewissen Grad in den nach außen abstehenden, halbkreisförmigen Aussparungen 72a, 72b verbleiben, wodurch der Küchenhobel 10 auf der Auffangschale 70 verschwenkbar gelagert bleibt. Es ist jedoch ebenso vorstellbar, dass der Küchenhobel 10 beispielsweise an den Vorsprüngen 74a und 74b an der Auffangschale 70 festgemacht werden kann, so dass in diesem Fall der Küchenhobel 10 zusammen mit der Auffangschale 70 mittels des Griffs 14 um die Stopperelemente bzw. Füße 71 c und 71d verschwenkt werden kann.

Neben der Aufnahme des Schneidguts bei der Verwendung des Küchenhobels 10 ist die Auffangschale 70 ferner dazu geeignet ist, den Küchenhobel 10. wenn dieser nicht verwendet werden soll, sowie eine Vielzahl von Einsätzen für eine ordentliche Aufbewahrung aufzunehmen. Wie dies in Figur 8 mit den Einsatzen 30' und 30" angedeutet ist, sind in der Auffangschale 70 ferner Mittel vorgesehen, um wenigstens einen Einsatz 30, 30', 30" für den Küchenhobel 10 aufzunehmen.

Anhand der vorstehend beschriebenen Ausführungsformen erkennt der Fachmann, dass auf der Basis der erfindungsgemäßen Vorrichtungen weitere vorteilhafte Ausgestaltungen verwirklicht werden können. Ferner wird der Fachmann erkennen, dass die hierin verwendeten Begriffe, wie "oben" bzw. "unten", "vorne" bzw. "hinten" und dergleichen, nicht dazu gedacht sind, die Orientierung der dadurch näher gekennzeichneten erfindungsgemäßen Elemente in irgendeiner Weise zu beschränken, sondern lediglich dazu dienen, diese Elemente von einander zu unterscheiden.

### Bezugszeichenliste:

- 10: Küchenhobel
- 12: Basisplatte
- 13a, 13b: Längsträger
- 14: Griff
- 16: V-Messer
- 19a, 19b: Führungsfedern
- 20a, 20b: Gelenke
- 22a, 22b: Fixierungsvorsprunge
- 30: Einsatz
- 30': Einsatz
- 30": Einsatz
- 40: Sicherheitshalter
- 41: Betätigungsnansch
- 42: Deckelelement
- 43a, 43b: Arretierelemente
- 44: Körperelement
- 45a, 45b: Schutzflügel
- 46: Bodenelement
- 46a, 46b: Führungsabschnitte
- 48: Druckstempel
- 49: Druckplatte
- 50: Sicherheitshalter
- 52: Bodenabschnitt
- 53: Randabschnitt
- 54: Greifkuppel
- 55: Druckstempel
- 56: Betätigungsflansch
- 57: Abstreifplatte
- 58a, 58b: seitliche Aussparungen
- 59: Quergrat
- 60a, 60b: Greifabschnitte
- 62: Riffelung
- 70: Auffangschale
- 71a-d: Stopperelemente
- 72a, 72b: Aussparungen
- 74a, 74b: Vorsprünge

## Patentansprüche

1. Sicherheitshalter (50) zum Aufnehmen und zum Halten von Schneidgut und zur Verwendung mit einem Küchenhobel (10), wobei der Sicherheitshalter (50) umfasst:
einen im Wesentlichen ebenen Bodenabschnitt (52);
einen vom Umfang des Bodenabschnitts (52) nach oben abstehenden Randabschnitt (53);
eine sich über den ebenen Bodenabschnitt (52) wölbende Greifkuppel (54), die im Wesentlichen die Greiffläche für die Hand eines Benutzers ausbildet; und
einen gleitbar verschiebbaren Druckstempel (55), der durch eine Öffnung in der Mitte der Greifkuppel (54) geführt ist;
**gekennzeichnet durch** wenigstens einen elastisch verformbaren Greifabschnitt (60a, 60b), der derart angeordnet und ausgestaltet ist, dass bei der Benutzung des Sicherheitshalters (50) zumindest ein Finger der Hand des Benutzers, mit der der Benutzer den Sicherheitshalter (50) hält und führt, zumindest zum Teil auf dem wenigstens einen Greifabschnitten (60a, 60b) aufliegt, so dass der wenigstens eine Greifabschnitt (60a, 60b) verformt wird und der Benutzer einen besseren Griff hat,
wobei der wenigstens eine elastisch verformbare Greifabschnitt (60a, 60b), auf der Greifkuppel (54) angeordnet ist.

2. Sicherheitshalter (50) nach Anspruch 1, wobei der wenigstens eine elastisch verformbare Greifabschnitt (60a, 60b) aus einem elastisch verformbaren Kunststoff besteht.

3. Sicherheitshalter (50) nach Anspruch 1, wobei der wenigstens eine elastisch verformbare Greifabschnitt (60a, 60b) eine Riffelung (62) aufweist.

4. Sicherheitshalter (50) nach Anspruch 1, wobei der Druckstempel (55) an seinem oberen Ende einen Betätigungsflansch (56) und an seinem unteren Ende eine Abstreifplatte (57) aufweist, die im eingefahrenen Zustand des Druckstempels (55), d.h. wenn sich der Betätigungsflansch (56) des Druckstempels (55) in anstoßender Beziehung mit dem Bereich der Greifkuppel (54) um die kreisförmige Öffnung herum befindet, bündig mit dem Bodenabschnitt (52) des Sicherheitshalters (50) verläuft.

5. Sicherheitshalter (50) nach Anspruch 4, wobei der Druckstempel (55) durch Führungsstangen geführt wird, die von der Unterseite der Greifkuppel (54) senkrecht zum Bodenabschnitt (52) hin abwärts verlaufen und durch entsprechende Löcher in der Abstreifplatte (57) des Druckstempels (55) geführt sind.

6. Sicherheitshalter (50) nach Anspruch 5, wobei auf der Unterseite der Abstreifplatte (57) des Druckstempels (55) eine Vielzahl von Dornen angeordnet ist, um das Schneidgut besser mit dem Sicherheitshalter (50) aufnehmen und halten zu können.

7. Sicherheitshalter (50) nach Anspruch 1, wobei der Bodenabschnitt (52) zusammen mit dem Randabschnitt (53) des Sicherheitshalters (50) an dessen Seiten zwei Aussparungen (58a, 58b) ausbildet.

8. Sicherheitshalter (50) nach Anspruch 7, wobei in den Aussparungen (58a, 58b) mehrere Dornen angeordnet sind, um ein längliches Schneidgut in diesen in Eingriff nehmen zu können.

9. Sicherheitshalter (50) nach Anspruch 7, wobei bei einer Aussparung (58a) der Randabschnitt (53) über einen Quergrat (59) bis zu der von dem Bodenabschnitt (52) gebildeten Ebene verläuft.

10. Sicherheitshalter (50) nach Anspruch 1, wobei die Öffnung in der Mitte der Greifkuppel (54) kreisförmig ist.

11. Küchenhobel (10) zum Schneiden von Schneidgut, wie Obst, Gemüse und dergleichen, und zur Verwendung mit einem auswechselbaren Einsatz (30), wobei der Küchenhobel (10) umfasst:
eine Basisplatte (12), an der ein V-Messer (16) festgelegt ist und die eine Auslauffläche ausbildet, wobei das V-Messer (16) mit einem Antihaftmittel beschichtet ist oder aus einem Material mit Antihafteigenschaften besteht;
zwei Längsträger (13a, 13b), die die Basisplatte (12) seitlich begrenzen und stabilisieren; und
einen Sicherheitshalter (50) nach einem der vorhergehenden Ansprüche.

12. Küchenhobel (10) nach Anspruch 11, wobei das Antihaftmittel oder das Material mit Antihafteigenschaften Polytetrafluorethylen (PTFE) und/oder ein Aluminium-Titan-Mischoxid umfasst.

## Claims

1. Safety holder (50) for receiving and holding food stuff and for use with a kitchen slicer (10), wherein the safety holder (50) comprises:
a substantially flat base portion (52);
an edge portion (53) protruding upwards from the circumference of the base portion (52);
a gripping dome (54) arching over the substantially flat base portion (52), wherein the gripping dome (54) substantially forms the gripping surface for the hand of a user; and
a slidingly displacable pressure piston (55) extending through an opening in the center of the gripping dome (54);
**characterized by**
at least one elastically deformable gripping portion (60a, 60b) being arranged and configured such that in use of the safety holder (50) at least one finger of the hand of the user, by means of which the user holds and guides the safety holder (50), rests at least partially on the at least one gripping portion (60a, 60b) such that the at least one gripping portion (60a, 60b) is deformed and the user has a better grip,
wherein the at least one elastically deformable gripping portion (60a, 60b) is disposed on the gripping dome (54).

2. Safety holder (50) according to claim 1, wherein the at least one elastically deformable gripping portion (60a, 60b) is made from an elastically deformable plastic.

3. Safety holder (50) according to claim 1, wherein the at least one elastically deformable gripping portion (60a, 60b) comprises ribs (62).

4. Safety holder (50) according to claim 1, wherein the pressure piston (55) comprises an actuation flange (56) at its upper end and a stripper plate (57) at its lower end, wherein the stripper plate (57) in the retracted position of the pressure piston (55), i.e. when the actuation flange (56) of the pressure piston (55) is in abutment with the portion of the gripping dome (54) around the circular opening, is flush with the base portion (52) of the safety holder (50).

5. Safety holder (50) according to claim 4, wherein the pressure piston (55) is guided by guiding rods, which extend from the underside of the gripping dome (54) perpendicular downwards to the base portion (52) and which extend through corresponding holes in the stripper plate (57) of the pressure piston (55).

6. Safety holder (50) according to claim 5, wherein a plurality of spikes are arranged on the underside of the stripper plate (57) of the pressure piston (55) for allowing for receiving and holding the foodstuff with the safety holder (50) in an improved way.

7. Safety holder (50) according to claim 1, wherein the base portion (52) together with the edge portion (53) of the safety holder (50) forms two recesses (58a, 58b) at its sides.

8. Safety holder (50) according to claim 7, wherein several spikes are arranged in the recesses (58a, 58b) for engaging elongated foodstuff therein.

9. Safety holder (50) according to claim 1, wherein the edge portion (53) for one recess (58a) extends across a transverse spine (59) to the plane formed by the base portion (52).

10. Safety holder (50) according to claim 1, wherein the opening in the center of the gripping dome (54) is circular.

11. Kitchen slicer (10) for slicing food stuff, such as fruits, vegetables and the like, and for use with a replaceable insert (30), wherein the kitchen slicer (10) comprises:
a base plate (12), wherein a V-shaped blade (16) is fixed to the base plate (12) and the base plate (12) defines an exit surface, wherein the V-shaped blade is coated with an anti-sticking material or comprises a material having anti-sticking properties;
two longitudinal supports (13a, 13b) that stabilize and limit the base plate (12) laterally; and
a security holder (50) according to any one of the preceding claims.

12. Kitchen slicer according to claim 11, wherein the anti-sticking material or the material having anti-sticking properties comprises polytetraflourethylen (PTFE) and/or an aluminum magnesium mixed oxide.

## Revendications

1. Support de sécurité (50) pour la prise et la tenue de produit à couper et pour utilisation avec une mandoline (10), dans lequel le support de sécurité (50) comprend:
une partie de fond essentiellement plane (52);
une partie latérale (53) se dressant vers la haut à partir de la partie de fond (52);
une coupole de préhension (54) formant une voute au-dessus de la partie de fond (52), constituant essentiellement la surface de préhension pour la main de l'utilisateur;
un poinçon d'appui (55) déplaçable par glissement, qui est guidé à travers une ouverture située au milieu de la coupole de préhension (54); et
**caractérisé en ce qu'**au moins une partie de préhension déformable (60a, 60b), qui est agencée et configurée de telle sorte que lors de l'utilisation du support de sécurité (50) au moins un doigt de la main de l'utilisateur, avec lequel l'utilisateur tient et guide le support de sécurité (50), repose au moins partiellement sur le ou les parties de préhension (60a, 60b), de telle manière que la au moins une partie de préhension (60a, 60b) est déformée et que l'utilisateur a une meilleure prise,
tandis que la au moins une partie de préhension (60a, 60b) élastiquement déformable est disposée sur la coupole de préhension (54).

2. Support de sécurité (50) selon la revendication 1, dans lequel la au moins une partie de préhension élastiquement déformable (60a, 60b) consiste en une matière plastique élastiquement déformable.

3. Support de sécurité (50) selon la revendication 1, dans lequel la au moins une partie de préhension élastiquement déformable (60a, 60b) présente une cannelure (62).

4. Support de sécurité (50) selon la revendication 1, dans lequel le poinçon d'appui (55) présente à son extrémité supérieure une bride de commande (56) et à son extrémité inférieure une plaque d'extraction (57), qui à l'état engagé du poinçon d'appui (55), c'est-à-dire lorsque la bride de commande (56) du poinçon d'appui (55) se trouve en ce qui concerne la zone de la coupole de préhension (54) en poussée autour de l'ouverture circulaire, se trouve en affleurement avec la partie de fond (52) du support de sécurité (50).

5. Support de sécurité (50) selon la revendication 4, dans lequel le poinçon d'appui (55) est déplacé au moyen de barres de guidage, qui sont dirigées à partir de la partie inférieure de la coupole de préhension (54) perpendiculairement en direction de la plaque d'extraction (57) du poinçon d'appui (55).

6. Support de sécurité (50) selon la revendication 5, dans lequel sur la face inférieure de la plaque d'extraction (57) du poinçon d'appui (55) est disposée une pluralité de broches permettant de mieux saisir et tenir le produit à couper avec le support de sécurité (50).

7. Support de sécurité (50) selon la revendication 1, dans lequel la partie inférieure (52) forme conjointement avec la partie formant le bord (53) du support de sécurité (50) sur les côtés de celui-ci deux évidements (58a, 58b).

8. Support de sécurité (50) selon la revendication 7, dans lequel sont disposées dans les évidements (58a, 58b) plusieurs broches destinées à permettre de maintenir engagé dans celles-ci un produit allongé à couper.

9. Support de sécurité (50) selon la revendication 7, dans lequel au niveau d'un évidement (58a, 58b) la section latérale (53) se déploie selon une arête transversale (59) jusqu'au plan formé par la partie inférieure (52).

10. Support de sécurité (50) selon la revendication 1, dans lequel l'ouverture située au milieu de la coupole de préhension (54) est circulaire.

11. Mandoline (10) pour la découpe de produit à couper tel que fruits, légumes et autres, et pour utilisation avec un insert amovible (30), dans laquelle la mandoline (10) comprend:
une plaque de base (12), à laquelle est fixée une lame en V (16) et qui forme une surface de déplacement, tandis que la lame en V (16) est revêtue d'un agent anti-adhérent ou consiste en un matériau ayant des propriétés d'anti-adhésion;
deux supports longitudinaux (13a, 13b) qui limitent latéralement et stabilisent la plaque de base (12); et
un support de sécurité (50) selon l'une des revendications précédentes.

12. Mandoline selon la revendication 11, dans laquelle l'agent antiadhérent ou le matériau ayant des propriétés d'anti-adhésion comprend du polytétrafluoroéthylène (PTFE) et/ou un oxyde mixte d'aluminium et de titane.
